# FASCICULE DE BREVET EUROPEEN

(11) **EP 0 531 226 B1**
(45) Date de publication et mention de la délivrance du brevet: **10.07.1996**
(21) Numéro de dépôt: 92402431.8
(22) Date de dépôt: 04.09.1992
(51) Int. Cl.: C03C 17/00, B60J 7/00

(54) **Dessins à moire pour toits d'automobiles**
Moiré Muster für Fahrzeugdächer
Moiré patterns for vehicle roofs

(30) Priorité: 06.09.1991 DE 4129578
(43) Date de publication de la demande: 10.03.1993
(73) Titulaire: SAINT-GOBAIN VITRAGE, F-92400 Courbevoie (FR); VEGLA Vereinigte Glaswerke GmbH, D-52066 Aachen (DE)
(72) Inventeur: Coninx, Max, W-5120 Herzogenrath (DE); Stolzenberg, Winfried, W-5000 Köln (DE); Hahn, Dieter, W-5132 Ubach-Palenberg (DE)
(74) Mandataire: Breton, Jean-Claude

(56) Documents cités:
- EP-A- 0 120 781
- GB-A- 1 153 761
- GB-A- 2 032 417
- CHEMICAL ABSTRACTS, vol. 110, no. 6 Columbus, Ohio, US; abstract no. 100430y, page 219 ;

## Description

La présente invention concerne un vitrage à transparence réduite aux rayonnements lumineux et thermiques, comportant, disposé sur une surface, un dessin réticulé en un matériau empêchant ou atténuant le passage du rayonnement.

Des vitrages de ce type sont connus et sont utilisés à diverses fins.

Le document DE-A-19 51 616 décrit un vitrage de ce type, dans lequel le dessin est de préférence constitué d'une encre à cuire, opaque ou semi-transparente, avec une transparence à la lumière de 0 à 40%. Les éléments formant le dessin réticulé, qui peuvent être carrés, rectangulaires, circulaires ou elliptiques, ont une longueur de 0,1 à environ 20 mm, et l'écartement ou espace intermédiaire entre ces petits éléments vaudra environ 0,1 à 10 mm. Les éléments peuvent être en contact mutuel, de sorte qu'il en résulte un réseau à trous. Les vitrages avec de tels dessins serviront de vitrages antiéblouissants ou de vitrages de protection thermique et peuvent par exemple également être utilisés en automobile.

Le document DE-B-23 61 669 décrit une fenêtre antiéblouissante du type précité, de préférence pour automobile. Dans cette fenêtre connue, le long du bord de la surface du vitrage dotée du dessin est prévue une bande continue en forme de cadre faite du matériau opaque, grâce à laquelle les bords du cadre de la fenêtre sont protégés du regard. Au cas où les vitrages sont collés au cadre de fenêtre, la bande périphérique continue en forme de cadre sert, en outre, de protection contre les rayons ultraviolets qui autrement provoqueraient une fragilisation de la colle.

Le document DE-C-27 13 892 décrit un vitrage comportant un dessin en forme de points sur une de ses surfaces, les points étant disposés suivant une distribution telle que la somme des superficies des points opaques couvre 10 à 30% de la surface du verre, tandis que la dimension des points est choisie telle que, dans chaque sens, on trouve 12 à 20 points par centimètre. Un tel vitrage sera principalement utilisé comme paroi translucide dans une salle de sport ou de jeux.

Le document EP-A-0 120 781 décrit un vitrage du type spécifié plus haut, convenant spécialement pour le toit vitré d'une automobile. Pour cette application, le dessin réalisé en une encre à cuire, opaque sera suffisamment dense pour que la transmission lumineuse et, par conséquent, également la transmission globale d'énergie soient inférieures à 30% et de préférence inférieure à 15%.

Les dessins connus sont constitués de structures réticulées dans lesquelles les éléments individuels de la couche empêchant ou atténuant le passage du rayonnement et les trous livrant passage au rayonnement présentent chacun une taille constante et sont distribués régulièrement et de manière homogène sur la totalité du dessin et sur la totalité de la surface du verre. Dans certains cas dans lesquels la transmission de la lumière à l'intérieur des structures réticulées doit varier d'une valeur élevée à une valeur faible ou inversement, on utilise des structures réticulées dans lesquelles les éléments individuels de la couche ou les trous de la couche livrant passage au rayonnement augmentent ou diminuent graduellement de dimension dans une direction, mais présentent, dans la direction transversale à celle-ci, une dimension constante. De telles structures sont en particulier utilisées pour les bandes filtrantes antiéblouissantes de la partie supérieure de pare-brise et dans la zone de transition entre le cadre décoratif opaque et le champ de vision entièrement transparent des vitrages d'automobiles.

Il s'est avéré que l'oeil humain est particulièrement sensible à de telles structures régulières et que, dans des conditions critiques d'observation de la structure réticulée, comme celles rencontrées par exemple lors du contrôle de production des vitrages, même les plus petits défauts sont visibles. Ainsi, lorsque, par exemple sur un vitrage portant un tel réseau régulier imprimé, un seul petit élément du réseau manque, ou un seul trou du réseau de trous est fermé, en règle générale, ce défaut est détecté lors du contrôle et le vitrage doit, par conséquent, être mis au rebut.

Des irrégularités du réseau imprimé sont d'autant plus visibles pour l'oeil humain que le taux de recouvrement du vitrage est élevé. Dans certains cas, les vitrages imprimés présenteront une transmission très faible, de moins qu'environ 30%, et ce, par exemple dans le cas de l'utilisation de tels vitrages comme vitrages de toit d'automobile. Dans ce cas, les vitrages sont, en règle générale, imprimés au moyen d'une encre à cuire noire, opaque. Dans d'autres cas, par exemple pour l'utilisation dans les véhicules de transport de malades, il faut que les vitrages latéraux soient rendus opaques de l'extérieur vers l'intérieur par impression à l'aide d'une encre blanche translucide, tout en offrant dans le sens inverse une transparence suffisante. Lorsque cet effet doit être obtenu à l'aide d'une impression recouvrant la surface, on obtient une réflexion élevée sur la face extérieure du vitrage, qui entraîne la mise en évidence des éventuelles petites déformations ou irrégularités de la surface du vitrage. Si par contre l'impression est effectuée sous la forme d'un réseau régulier, on se heurte également à la difficulté mentionnée plus haut selon laquelle les plus petits défauts du réseau imprimé sont visibles à l'oeil, tant par réflexion que par transparence.

L'invention a pour but de réaliser des vitrages à transmission lumineuse réduite du type mentionné plus haut, de telle sorte que les défauts éventuels du dessin réticulé n'accrochent pas l'oeil. En particulier, on pourra fabriquer des vitrages présentant un degré de recouvrement particulièrement élevé, c'est-à-dire avec un degré de transmission très réduit, sans qu'apparaissent des effets secondaires perturbateurs dus au taux de recouvrement élevé.

Selon l'invention, ce but est réalisé par le fait que le dessin réticulé est constitué de la combinaison de différents réseaux, notamment un réseau grossier et un réseau fin, de sorte que, dans une structure régulière vue sur une grande étendue, de grands et de petits éléments de la partie opaque ou translucide du dessin et/ou de grands et de petits trous transparents du dessin alternent.

Il s'est avéré que l'oeil réagit beaucoup moins à de petites irrégularités ou à des défauts de la structure réticulée lorsque celle-ci est réalisée selon l'invention. Comme le dessin réticulé selon l'invention varie déjà en sol, l'oeil humain est beaucoup moins sensible à de petites Irrégularités que dans un dessin très régulier. Même par rapport à un vitrage comportant un revêtement continu, sur toute sa surface, d'une couche translucide ou d'une couche opaque, une couche présentant la structure selon l'invention offre l'avantage essentiel que de petites déformations superficielles ou d'autres défauts de la surface ou de la couche, qui sont particulièrement visibles en lumière réfléchie, apparaissent de manière nettement moins marquée.

La réalisation des vitrages selon l'invention permet, en outre, de fabriquer des vitrages avec un taux de recouvrement très élevé et, par conséquent, un degré de transmission très bas et ce, sans le risque de difficultés particulières lors de la fabrication des vitrages et sans le risque d'une augmentation des mises au rebut lors de la fabrication des vitrages.

En principe, on peut fabriquer les vitrages selon l'invention, par exemple en superposant à un fin réseau de trous régulier habituel, à trous constants, un réseau de lignes dont les lignes et les espaces entre les lignes présentent en largeur des dimensions correspondant à un multiple du diamètre des trous ou de la distance séparant les trous du réseau de trous. A la place d'un réseau de lignes, on peut également combiner un réseau de points grossier ou un réseau de trous grossier avec le réseau de trous fins. Globalement, la combinaison des deux réseaux donne à nouveau un réseau dont la macrostructure est régulière, mais la microstructure irrégulière.

De préférence, le diamètre des trous du réseau fin est compris entre 0,3 et 0,6 mm et le taux de recouvrement du dessin combiné est compris entre 75 et 98 %.

Avantageusement, la combinaison de ces différents réseaux constitue un dessin moiré.

Le but de l'invention est également de proposer un procédé particulièrement approprié pour la fabrication de patrons d'impression pour les vitrages réalisés selon l'invention. Ce procédé consiste à créer des dessins à structure moirée par superposition de deux réseaux réguliers de trous, de points ou de traits avec un décalage angulaire mutuel des deux réseaux, ces dessins servant de patron pour la fabrication des écrans sérigraphiques. On peut ainsi fabriquer de manière très simple, en recourant à des patrons existants de réseaux de trous, les structures réticulées les plus diverses avec différents taux de transmission.

De préférence, deux réseaux réguliers de trous présentant un diamètre de trou de 0,4 à 0,6 mm et un écartement entre trous voisins de 0,3 à 0,6 mm sont combinés l'un avec l'autre sous un angle mutuel de 5 à 45°.

Des exemples de réalisation de l'invention seront décrits ci-après plus en détail avec référence aux dessins annexés, dans lesquels :
la fig. 1 représente un réseau de trous habituel servant à la fabrication de vitrages de toit pour automobiles (état de la technique),
la fig. 2 représente un premier mode de réalisation d'un réseau imprimé selon l'invention,
la fig. 3 représente un autre mode de réalisation d'un réseau imprimé selon l'invention, et
la fig. 4 représente encore un autre mode de réalisation d'un réseau imprimé selon l'invention.

Les réseaux représentés conviennent par exemple pour la fabrication de vitrages de fenêtres d'automobile en verre de sécurité trempé, qui, avant la trempe, sont dotés d'un réseau imprimé par sérigraphie au moyen d'une encre à cuire. Il peut s'agir, dans le cas de vitrages de fenêtres de toit, de couches opaques d'une encre à cuire, par exemple noire. Dans le cas de vitrages latéraux, qui présentent une transparence réduite et doivent par exemple empêcher la vue de l'extérieur vers l'intérieur, il peut s'agir de couches dispersant la lumière, par exemple en une encre à cuire à pigment coloré blanc.

Les écrans utilisés pour la sérigraphie sont fabriqués de la manière habituelle en recouvrant le tissu sérigraphique d'une couche photosensible qui est éclairée à travers une feuille présentant le dessin voulu, comme décrit par exemple dans le document US-A-3 813 519.

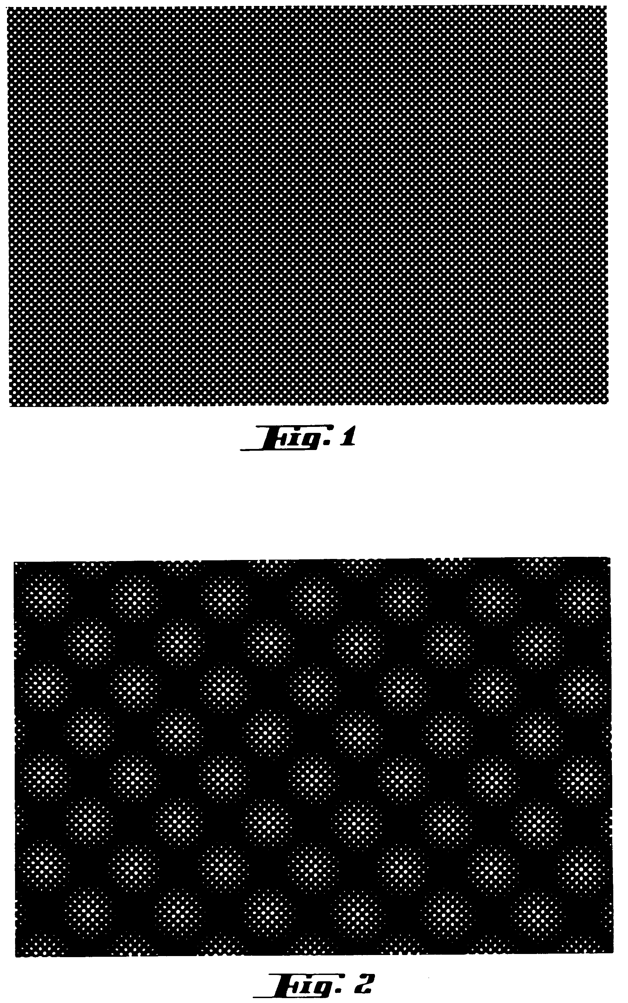

Dans l'état de la technique, on utilise pour la fabrication de l'écran sérigraphique, une feuille avec un réseau de trous tel que celui représenté, à plus grande échelle, sur la fig. 1. Les trous individuels du réseau ont par exemple un diamètre de 0,5 mm, un écartement mutuel de 0,4 mm, et leurs rangées successives sont mutuellement décalées en quinconce. Un tel réseau de trous possède un taux de recouvrement global de 75 %, c'est-à-dire que 25 % de la surface de vitrage ne sont pas recouverts. Un vitrage présentant un tel réseau en une encre de sérigraphie noire habituelle en substance opaque possède un taux global de transmission lumineuse TL de 15 à 25 % et un taux global de transmission énergétique TE de 12 à 22 %.

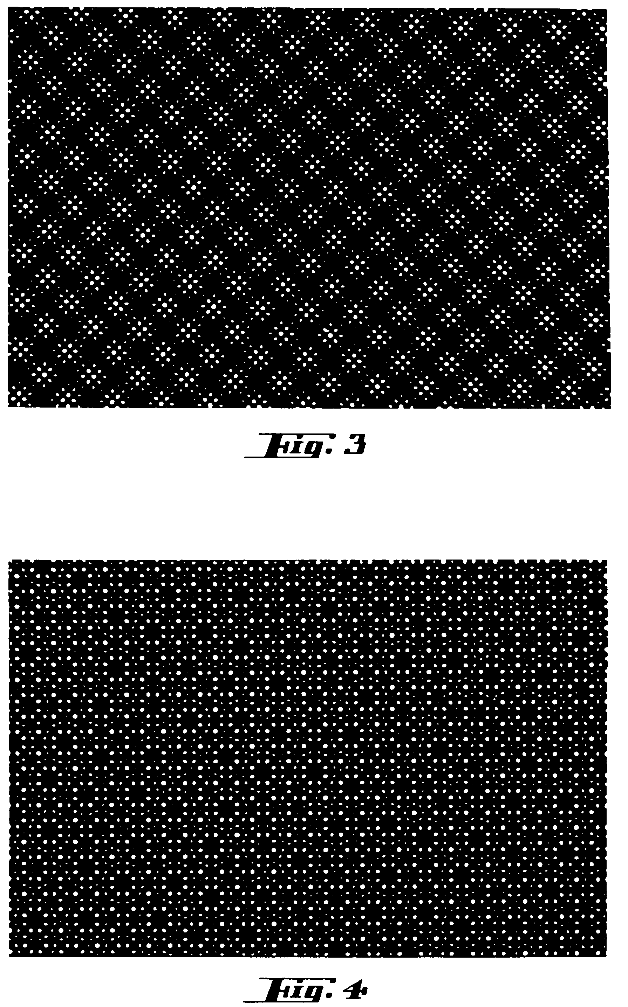

Lorsque l'on superpose deux feuilles tramées telles que celles représentées sur la fig. 1 avec un décalage angulaire de 5 à 7°, on obtient un dessin d'interférence tel que celui représenté sur la fig. 2. L'exposition de l'écran sérigraphique recouvert de la couche photosensible s'effectue ainsi à travers deux feuilles superposées. A l'aide de deux feuilles tramées identiques à celle de la fig. 1, on peut de cette manière réaliser sur l'écran sérigraphique les différentes structures de réseaux qui toutes présentent les propriétés selon l'invention.

Le dessin de réseau représenté sur la fig. 2 possède un taux de recouvrement nettement plus élevé que le dessin de réseau de la fig. 1. A côté de l'effet favorable sur l'aspect du vitrage, on obtient une réduction substantielle de la transmission globale d'énergie.

Lorsque dans la fabrication de l'écran sérigraphique, les deux feuilles tramées présentant chacune la structure de la fig. 1 sont superposées avec un angle de décalage mutuel plus important, on obtient avec un angle de décalage d'environ 15° un dessin de réseau correspondant à celui de la fig. 3. Ce dessin de réseau possède un taux de recouvrement encore plus élevé et présente un taux global de transmission lumineuse TL de 5 à 6 % et un taux global de transmission énergétique TE de 7 à 8 %.

En augmentant encore le décalage angulaire des deux feuilles tramées lors de la fabrication de l'écran sérigraphique, on obtient une nouvelle augmentation du taux de recouvrement conjointement avec une nouvelle modification de la structure de réseau. La fig. 4 représente par exemple un dessin de réseau présentant les propriétés selon l'invention et obtenu avec un angle de décalage d'environ 30°.

## Revendications

1. Vitrage à transparence réduite pour le rayonnement lumineux et thermique, comportant, disposé sur une surface, un dessin réticulé en un matériau empêchant ou atténuant le passage du rayonnement, caractérisé en ce que le dessin réticulé est constitué de la combinaison de différents réseaux, notamment un réseau grossier et un réseau fin, de sorte que, dans une structure régulière vue sur une grande étendue, de grands et de petits éléments des parties opaques ou translucides du dessin et/ou de grands et de petits trous transparents du dessin alternent.

2. Vitrage selon la revendication 1, caractérisé en ce que le dessin réticulé est constitué de la combinaison d'un réseau régulier de trous dont les trous sont identiques et d'un réseau régulier de trous dont les trous sont identiques et d'un réseau régulier de lignes dont les lignes et les espaces séparant les lignes présentent en largeur des dimensions correspondant à un multiple du diamètre des trous ou de la distance séparant les trous du réseau de trous.

3. Vitrage selon la revendication 1, caractérisé en ce que le dessin réticulé est constitué de la combinaison d'un réseau régulier de trous fin et d'un réseau régulier de trous ou de points grossier.

4. Vitrage selon l'une des revendications 1 à 3, caractérisé en ce que le diamètre des trous du réseau fin est de 0,3 à 0,6 mm, et le taux de recouvrement du dessin combiné est de 75 à 98%.

5. Vitrage selon l'une des revendications 1 à 4, caractérisé en ce que le dessin réticulé est constitué d'un dessin moiré.

6. Procédé de fabrication pour sérigraphie d'un vitrage selon l'une des revendications 1 à 5, caractérisé en ce que, lors de la fabrication de l'écran sérigraphique présentant le réseau d'impression par exposition de la couche photosensible de l'écran sérigraphique à travers la superposition de deux réseaux réguliers de trous, de points ou de traits avec décalage angulaire mutuel des deux feuilles portant ces réseaux, des structures moirées sont créées sur la couche photosensible.

7. Procédé selon la revendication 6, caractérisé en ce que deux réseaux réguliers de trous présentant un diamètre de trou de 0,4 à 0,6 mm et un écartement entre trous voisins de 0,3 à 0,6 mm sont combinés l'un avec l'autre sous un angle mutuel de 5 à 45°.

8. Utilisation d'un vitrage selon l'une des revendications 1 à 5 comme vitrage de fenêtre de toit ou comme vitrage latéral pour automobile.

## Claims

1. Glazing pane of reduced transparency to luminous and thermal radiation, comprising, disposed on one face, a reticulated design of a material that prevents or attenuates the passage of the radiation, characterized in that the reticulated design is composed of a combination of different networks, notably a coarse network and a fine network, in such a way that, in a regular structure viewed over a large extent, large and small elements of the opaque or translucent parts of the design and/or large and small transparent holes of the design alternate.

2. Glazing pane according to Claim 1, characterized in that the reticulated design is constituted of a combination of a regular network of holes, the holes of which are identical, and of a regular network of lines, of which the lines and the spaces separating them have a width of dimensions corresponding to a multiple of the diameter of the holes or of the distance separating the holes of the network of holes.

3. Glazing pane according to Claim 1, characterized in that the reticulated design is constituted of a combination of a regular network of fine holes and a regular network of coarse holes or dots.

4. Glazing pane according to one of Claims 1 to 3, characterized in that the diameter of the holes of the fine network is from 0.3 to 0.6 mm, and the rate of coverage of the combined design is from 75 to 98%.

5. Glazing pane according to one of Claims 1 to 4, characterized in that the reticulated design is constituted of a moiré design.

6. Method of making by screen-printing a pane according to one of Claims 1 to 5, characterized in that, during the production of the printing screen having the print network by exposure of the photosensitive coating of the printing screen through the super-position of two regular networks of holes, dots or strokes with relative angular offset of the two sheets carrying these networks, moiré structures are created on the photosensitive coating.

7. Method according to Claim 6, characterized in that two regular networks of holes having a hole diameter of 0.4 to 0.6 mm and a spacing between adjacent holes of 0.3 to 0.6 mm are combined with each other at a relative angle of 5 to 45°.

8. Use of a glazing pane according to one of Claims 1 to 5 as window pane for roof or as lateral window pane for automobile.

## Patentansprüche

1. Glasscheibe mit verminderter Durchlässigkeit für Licht- und Wärmestrahlung, mit einem auf einer Oberfläche angeordneten rasterartigen Muster aus einem den Strahlendurchtritt verhindernden oder dämpfenden Material, **dadurch gekennzeichnet**, daß das rasterartige Muster aus der Kombination von verschiedenen Rastern, insbesondere einem groben und einem feinen Raster, besteht derart, daß sich bei einer großflächig gesehen regelmäßigen Struktur größere und kleinere Bruchstücke der lichtundurchlässigen oder lichtdämpfenden Teile des Musters und/oder größere und kleinere lichtdurchlässige Löcher des Musters abwechseln.

2. Glasscheibe nach Anspruch 1, dadurch gekennzeichnet, daß das rasterartige Muster aus der Kombination eines regelmäßigen Lochrasters mit gleichbleibenden Löchern und eines regelmäßigen Linienrasters besteht, dessen Linien und dessen Zwischenräume zwischen den Linien jeweils Breitenabmessungen aufweisen, die einem Mehrfachen des Durchmessers der Löcher oder des Abstands zwischen den Löchern des Lochrasters entsprechen.

3. Glasscheibe nach Anspruch 1, dadurch gekennzeichnet, daß das rasterartige Muster aus der Kombination eines regelmäßigen feinen Lochrasters und eines regelmäßigen groben Loch- oder Punktrasters besteht.

4. Glasscheibe nach einem der Ansprüche 1 bis 3, dadurch gekennzeichnet, daß der Lochdurchmesser des feinen Rasters 0,3 bis 0,6 mm, und der Bedeckungsgrad des kombinierten Musters 75 bis 98 % beträgt.

5. Glasscheibe nach einem der Ansprüche 1 bis 4, dadurch gekennzeichnet, daß das rasterartige Muster aus einem Moiré-artigen Muster besteht.

6. Verfahren zur Herstellung einer Glasscheibe nach einem der Ansprüche 1 bis 5 mit Hilfe des Siebdruckverfahrens, dadurch gekennzeichnet, daß bei der Herstellung des das Druckraster aufweisenden Drucksiebes durch Belichtung der lichtempfindlichen Schicht des Drucksiebes durch Überlagerung von zwei gleichmäßigen Loch-, Punkt- oder Strichrastern unter gegenseitiger Winkelverschiebung der beiden diese Raster aufweisenden Folien Moiré-artige Musterstrukturen auf der lichtempfindlichen Schicht erzeugt werden.

7. Verfahren nach Anspruch 6, dadurch gekennzeichnet, daß zwei gleichmäßige Lochraster mit einem Durchmesser der Löcher von 0,4 bis 0,6 mm und einem Abstand zwischen benachbarten Löchern von 0,3 bis 0,6 mm unter einem Winkel von 5 bis 45 Grad miteinander kombiniert werden.

8. Verwendung einer Glasscheibe nach einem der Ansprüche 1 bis 5 als Dachfensterscheibe oder als Seitenscheibe für Kraftfahrzeuge.
